# EUROPEAN PATENT APPLICATION

(11) **EP 2 868 572 A1**
(43) Date of publication of application: **06.05.2015**
(21) Application number: 13186783.0
(22) Date of filing: 30.09.2013
(51) Int. Cl.: B64C 1/14

(54) **Cargo door arrangement**

(71) Applicant: Airbus Operations GmbH, 21129 Hamburg (DE)
(72) Inventor: Jespersen, Andreas, 21614 Buxtehude (DE); Harden, Felix, 21039 Hamburg (DE); Klare, Jürgen, 21244 Buchholz (DE)
(74) Representative: UEXKÜLL & STOLBERG

(57) **Abstract**

A cargo door arrangement (1) for an aircraft and an aircraft comprising such a cargo door arrangement. The cargo door arrangement comprises a fuselage portion (2) , a cargo door (3) and a locking mechanism. The fuselage portion comprises a skin portion (5) , at least one fuselage former (6) and an opening. The cargo door (3) comprises at least one door former (8). The locking mechanism comprises a first engagement element (11), a second engagement element (12)and a connecting means (13). The first engagement element (11) has a tapered portion and is rigidly connected to the door former (8). The second engagement element (12) comprises a tapered cavity having a shape matching the shape of the tapered portion and is rigidly connected the fuselage former (6). In the closed position the tapered portion is engageable with the cavity.

## Description

The present application relates to a cargo door arrangement for an aircraft and to an aircraft comprising such a cargo door arrangement.

Fuselages of aircraft comprise a plurality of frames or formers which extend annularly and perpendicular to the longitudinal axis of the aircraft. The skin of the aircraft is supported by, amongst others, these formers. In addition to transmitting circumferential forces, which arise, for example, due to a pressure differential between the aircraft interior and the exterior, it is the main function of the formers to transmit bending forces. In regions in which openings for doors are provided in the fuselage the formers and, consequently, their force transmission function are interrupted by the openings.

Different from passenger doors, for which it must be ensured that they can still be opened after an accident, cargo doors may be constructed and mounted to the fuselage such that they transmit forces, because they are not used for an emergency evacuation in the case of an accident. Therefore, one seeks to configure the cargo doors in such a manner that the interruption of the force transmission by the door opening is compensated as completely as possible. However, it has turned out to be difficult to achieve this object without increasing the complexity and the weight of the cargo door arrangement and the costs of producing and mounting the cargo door.

It is an object of the present invention to provide a cargo door arrangement which allows an effective transfer of both circumferential and bending forces from the fuselage formers to the cargo door and which is nevertheless of low complexity and weight.

This object is achieved by a cargo door arrangement having the features of claim 1. Advantageous embodiments of the cargo door arrangement are the subject-matter of the dependent claims.

According to the invention, a cargo door arrangement for an aircraft comprises a fuselage portion of an aircraft, which fuselage portion may be annular or cylindrical. The fuselage portion comprises a skin portion, which upon assembling the fuselage portion as part of an aircraft forms a portion of the exterior skin of the aircraft, and one or more fuselage formers. As any former, one or more fuselage formers are arranged such that upon assembling the fuselage portion as part of an aircraft they extend in the circumferential direction, i.e. transversely and preferably perpendicularly with respect to the longitudinal axis of the aircraft.

The one or more fuselage formers each have a first flange or belt connected to the skin portion, a second flange or belt and a web interconnecting the first and second flanges. As usual, the fuselage formers are arranged on the surface of the skin portion which, upon assembling the fuselage portion as part of an aircraft faces toward the interior of the aircraft, i.e. on the inner surface of the skin portion. Therefore, the first and second flanges are commonly also referred to as outer flange and inner flange, respectively. The second flange is spaced from the skin portion. In a preferred embodiment the first and second flanges extend parallel to each other. It is then further preferred for the web to extend perpendicularly with respect to the first and second flanges. In any case, the first flange and/or the second flange may extend to opposite sides or to only one side of the web. For example, the fuselage formers may have an I-shaped or C-shaped cross-section. It is possible that different ones of the fuselage formers are of different construction.

In the fuselage portion an opening is provided, which interrupts the one or more fuselage formers, such that each such fuselage former has two sections extending from opposite edges of the opening. In other words, the opening "extends through" the respective fuselage formers. It should be noted that the fuselage portion may also comprise other formers which are not interrupted by the opening.

Further, the cargo door arrangement includes a cargo door comprising one or more door formers, which are of the same general construction as the fuselage formers. Thus, the one or more door formers each have a first flange or belt connected to a door panel, a second flange or belt and a web interconnecting the first and second flanges. Similar to the fuselage formers, the door formers are arranged on the surface of the door panel which, upon assembling the fuselage portion as part of an aircraft and arranging the door in the closed position faces toward the interior of the aircraft, i.e. on the inner surface of the door panel. Therefore, the first and second flanges may again also be referred to as outer flange and inner flange, respectively. The second flange is spaced from the door panel. In a preferred embodiment the first and second flanges extend parallel to each other. It is then further preferred for the web to extend perpendicularly with respect to the first and second flanges. In any case, the first flange and/or the second flange may extend to opposite sides or to only one side of the web. For example, the door formers may have an I-shaped or C-shaped cross-section. It is possible that different ones of the door formers are of different construction.

The cargo door is coupled to the fuselage portion such that it is selectively movable between a closed position, in which it closes the opening, and an open position, in which it allows access through the opening. Preferably, the coupling is effected by means of a hinge, wherein the hinge axis preferably extends perpendicularly to the one or more fuselage formers.

Finally, the cargo door arrangement comprises a locking mechanism adapted for selectively locking the cargo door in the closed position.

In the closed position of the door each of the door formers extends between the two sections of a corresponding one of the fuselage formers. In other words, the respective door former is aligned with the two sections of the respective fuselage former and forms an extension thereof. Thus, each of the two sections of each of the fuselage formers has an end portion arranged at one of the two opposite edges of the opening, and each of the door formers has two end portions which, in the closed position of the door, are disposed opposite to and facing the end portion of one of the sections of the corresponding fuselage former.

For at least one of the door formers the locking mechanism comprises a first engagement element and a second engagement element. The first engagement element has opposite first and second ends and, between the first and second ends, a tapered portion tapering in the direction from the first end to the second end. The first engagement element is rigidly connected - and preferable fixedly attached - at its first end to the first flange of the corresponding door former at the end portion of one of the two sections thereof.

The second engagement element comprises a tapered cavity open at a first end and tapering from the first end to a second end of the cavity, wherein the cavity has a shape matching the shape of the tapered portion. The second engagement element is rigidly connected to an end portion of the respective fuselage former at least at the first and second flanges thereof and in such a manner that from the first end to the second end the cavity extends in a direction between the first and second flanges of the respective fuselage former and upon moving the door into the closed position the tapered portion is engageable with the cavity such that in the closed position there is a form-closed engagement between the tapered portion and the second engagement element in a first and a second engagement region. The first engagement region is arranged proximate to the first end of the cavity. The form-closed or positive locking engagement between the first and the second engagement means in the first engagement region, thus, allows for a load transfer between the first flange of the door former and the first flange of the fuselage former. The second engagement region is arranged proximate to the second end of the cavity. The form-closed or positive locking engagement between the first and the second engagement means in the second engagement region, thus, allows for a load transfer between the second flange of the door former and the second flange of the fuselage former.

In a preferred exemplary embodiment, in the closed position of the door the entire surface of the tapered portion of the first engagement element contacts an interior wall of the second engagement element defining the tapered cavity i.e. the first engagement region and second engagement region are merged to form a single engagement region. It should be noted that the tapered portion may be a section of a larger tapered region of the first engagement element, wherein outside the tapered portion the tapered region does not contact the walls of the cavity in the closed position of the door.

The locking mechanism also comprises a connecting means adapted to rigidly connect, in the closed position of the door, the second flange of the respective door former to the first or second engagement element at a position closer to the second end of the cavity than to the open first end of the cavity. Thus, the location of connection of the connecting means to the first or second engagement element is spaced from the location of rigid connection of the first engagement element to the first flange of the end portion of the respective door former. Forces transmitted along the first flange of a fuselage former are transmitted via the second engagement element, the first engagement element and the rigid connection of the first engagement element to the first flange of the corresponding door former, and forces transmitted along the second flange of a fuselage former are transmitted via the second engagement element, possibly the first engagement element and the connecting means to the second flange of the corresponding door former.

The above cargo door arrangement has the advantage that it requires only very little additional elements for the transfer of forces and nevertheless allows for the transmission not only of circumferential forces, but also of bending forces. In fact, in the closed position the cargo door can act as an integral part of the fuselage. At the same time, the increase in weight and complexity is very low and the door arrangement is easy to operate. Due to the cooperating tapering portions of the first and second engagement elements it is possible to ensure that the door closes reliably in a self-centering manner and even in case of a fuselage deformation due to, e.g., different loading conditions. Thus, the cargo door arrangement is able to compensate for such deformations.

It should be noted that due to the fact that aircraft fuselages and cargo doors generally have a curved exterior, the direction of extension of the first engagement elements been their first and second ends is generally not perpendicular to the direction of extension of the first flanges, i.e. generally the first engagement elements extend, from the first end to the second end thereof, at an oblique angle with respect to the door panel. Consequently, the cavity of the second engagement elements is generally oriented correspondingly, and longitudinal forces are therefore generated in the first engagement element. Such longitudinal forces can be accommodated advantageously as shear loads by the connecting means and/or the remainder of the locking means.

In a preferred embodiment the cargo door arrangement further comprises for each pair of the first and second engagement elements, i.e. for each of the first engagement elements and each of the second engagement elements arranged to engage each other in the described manner upon closing the cargo door, a latching means adapted to be movable between a release position, in which the first and second engagement elements can be disengaged from each other, and a latching position, in which disengagement of the first and second engagement elements is prevented. Thus, the latching means is adapted for ensuring that the first and second engagement elements are maintained in the described form-closed contact while the cargo door is in the closed position.

The latching means may be provided separately from the connecting means. However, in a preferred embodiment the connecting means is constituted by the latching means. More particularly, the latching means is connected and preferably fixedly connected to the second flange of the respective door former and in the latching position engages the first or second engagement element at a position closer to the second end of the cavity than to the open first end of the cavity.

In the case of such a latching means it is further preferred if the latching means comprises a gripping means adapted to releasably grip in the latching position the first or second engagement element at a position closer to the second end of the cavity than to the open first end of the cavity. The gripping means may preferably comprise two gripping jaws which are hinged to the respective door former, preferably at the second flange thereof. In a preferred embodiment the cavity is also open at the second end, and in the closed position of the door the first engagement element extends through the second end of the cavity and projects with a portion from the second engagement element, wherein the projecting portion comprises an engagement means adapted to be engaged by the gripping means. Such an engagement means may advantageously be or comprise a groove in the projecting portion, preferably a groove which extends in the circumferential direction around the projecting portion, i.e. transversely to direction between the first and second ends of the respective first engagement element. Such engagement of the projecting portion by the gripping means prevents withdrawal of the first engagement element from the second engagement element. In this regard, it is particularly preferred if the engagement means is located on the projecting portion such that upon gripping the engagement means the gripping means is in contact with the second engagement element at the open second end thereof, so that the gripping element can then safely prevent any relative motion between the first and second engagement elements in the latching position.

In an alternative embodiment, in which the connecting means is not constituted by the latching means, the connecting means is fixedly connected to the second flange of the respective door former and to the first engagement element at a position closer to the second end of the cavity than to the open first end of the cavity when the door is in the closed position. In this embodiment the second engagement element may be constructed such that it comprises an outer shell or housing defining the cavity and that the outer shell or housing can be selectively opened or closed in order to allow the engagement with the tapered portion of the first engagement element.

In a preferred embodiment the associated first and second engagement elements are arranged such that upon moving the cargo door into the closed position the first engagement element or at least its tapered portion enters the cavity through the open first end of the cavity. This arrangement allows for a particularly simple engagement between the first and second engagement elements upon closing the door.

In a preferred embodiment the tapered portion extends from the first end of the first engagement element and/or up to the second end of the first engagement element. Preferably it extends over the entire length between the first and second ends. Alternatively, it may also be advantageous if - in the above-mentioned case of the cavity being also open at the second end and in the closed position of the door the first engagement element extending through the second end of the cavity and projecting with a portion from the second engagement element - the tapered portion extends from the first end up to the beginning of the projecting portion.

In a preferred embodiment the second engagement element is rigidly connected to the end portion of the fuselage former over the entire cross section thereof. In other words, the second engagement element is rigidly connected to the first flange, to the entire cross-sectional extension of the web between the first and second flanges, and to the second flange. In the preferred case of the web of the door formers and of the fuselage formers extending at right angles to the door panel and the skin portion, respectively, the first engagement element is arranged such that the direction between the first and second ends of the cavity extends in the plane defined by the web. This configuration allows for a particularly effective force transfer.

In a preferred embodiment the cross-sectional shape of the cavity exhibits circular symmetry over the entire length from the first end to the second end of the cavity. Accordingly, the tapered portion of the first engagement element likewise exhibits circular symmetry. Such a circular symmetry allows for a particularly reliable and simple engagement of the first and second engagement elements under various load conditions.

In a preferred embodiment the tapered portion and, preferably, the entire first engagement element has the shape of a cone or a truncated cone. In an alternative preferred embodiment the tapered portion and, preferably, the entire first engagement element has the shape of a pyramid or a truncated pyramid or frustum.

In a preferred embodiment the first engagement element is directly attached to the first flange of the respective door former and/or the connecting means is directly attached or adapted to be directly attached to the second flange of the respective door former.

The present invention also provides an aircraft comprising a cargo door arrangement in accordance with any of the embodiments described above.

In the following an exemplary embodiment of the invention is explained in more detail with reference to the figures.
Figure 1 shows a schematic cross-sectional view of a cargo door arrangement according to an embodiment of the present invention.
Figure 2 shows a schematic perspective view of a portion of the cargo door arrangement of Figure 1 in an open position of the cargo door.
Figure 3 shows a schematic perspective view of a portion of the cargo door arrangement of Figure 1 in the closed position of the cargo door.
The cargo door arrangement 1 schematically depicted in Figures 1 to 3 comprises a fuselage portion 2 of an aircraft and a cargo door 3 which is adapted to selectively close an opening 4 provided in the fuselage portion 2.

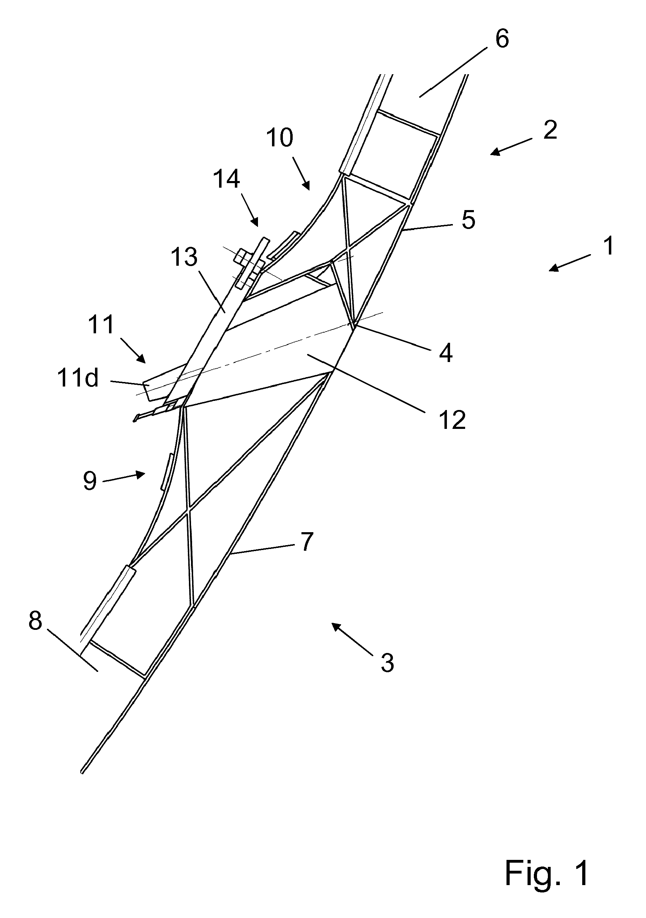

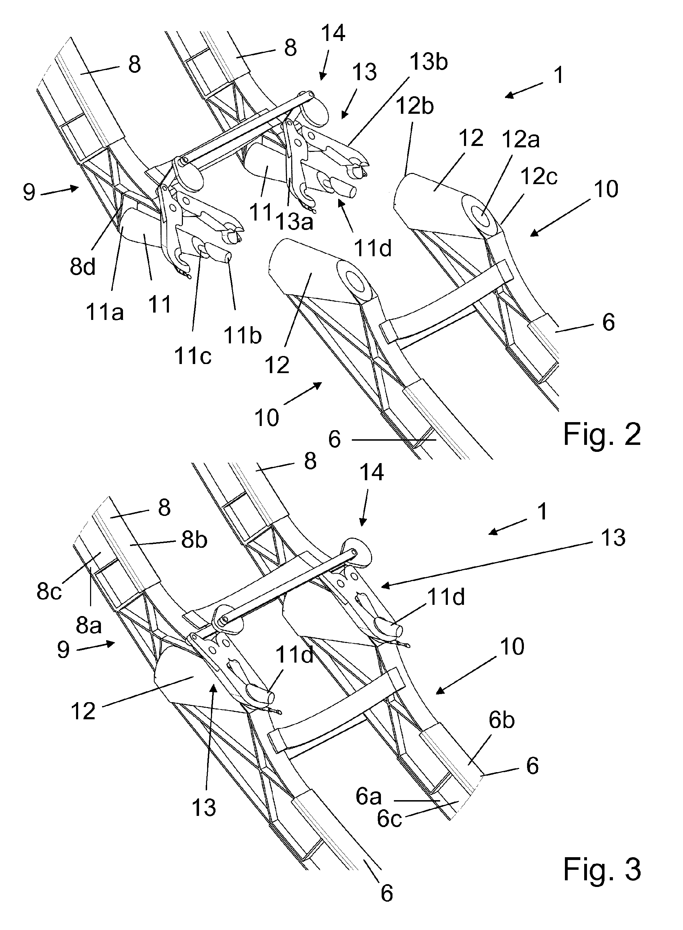

As illustrated in Figure 1, which is a cross-sectional view along the longitudinal axis of an aircraft in which the fuselage portion 2 is mounted, the fuselage portion 2 comprises an outer skin 5 supported in a conventional manner on a plurality of fuselage formers 6 (two of them can be seen in the perspective views of Figures 2 and 3). In the mounted condition of the cargo door arrangement the fuselage formers 6 extend in the circumferential direction of the fuselage, i.e. perpendicularly with respect to the longitudinal axis of the aircraft and the fuselage.

As likewise illustrated in Figure 1, the cargo door 3 comprises a door panel 7, which provides the outer surface of the door 3 and which is supported in a conventional manner on a plurality of door formers 8 (two of them are visible in the schematic perspective views of Figures 2 and 3).

Two of the fuselage formers 6 and two of the door formers 8 are visible in the schematic perspective views of Figures 2 and 3, which show the cargo door arrangement 1 with the outer skin 5 and the door panel 7 removed for ease of illustration. Figure 2 shows the cargo door arrangement 1 with the cargo door 3 in an open position, and Figure 3 shows the cargo door arrangement 1 with the cargo door 3 in its closed position. In the embodiment the cargo door 3 is a pivoting door which is coupled to the fuselage portion 2 at an edge opposite the edge seen in Figure 1 by means of, e.g., a hinge arrangement. In particular, when mounted in an aircraft the hinge axis or the axis about which the door 3 pivots between the open and closed positions is extending along the upper edge of the door 3 and extends parallel to the longitudinal axis of the aircraft.

As can be seen in Figures 1 and 3, in the closed position of the door 3 each of the door formers 8 is aligned with one of the fuselage formers 6 and constitutes a continuous extension of the respective fuselage former 6. Thus, each of the door formers 8 is associated with another one of the fuselage formers 6, wherein in the closed position of the door 3 an end portion 9 of the door former 8 is located opposite and in abutment with an end portion 10 of the associated fuselage former 6. Although not illustrated in the Figures, it is to be understood that at the other end of the door former 8 and an end portion thereof is similarly located opposite an end portion at the other end of the annularly extending associated fuselage former 6. In other words, the opening 4 extends through and therefore interrupts the fuselage former 6, and the associated door former 8 is arranged to be located in the "gap" created by the opening 4 in the fuselage former 6 when the door 3 is in the closed position.

In the conventional manner, each of the fuselage formers 6 comprises a first or outer flange 6a directly coupled or attached to the skin 5, a second or inner flange 6b extending parallel to the first flange 6a, and a web 6c interconnecting and extending perpendicularly to the first and second flanges 6a, 6b. The web 6c also extends perpendicularly to the skin 5. Similarly, likewise in a conventional manner, each of the door formers 8 comprises a first or outer flange 8a directly coupled or attached to the door panel 7, a second or inner flange 8b extending parallel to the first flange 8a, and a web 8c interconnecting and extending perpendicularly to the first and second flanges 8a, 8b. The web 8c also extends perpendicularly to the door panel 7.

To the terminal end of the inner flange 8a of each of the door formers 8 a cone-shaped element 11 forming a first engagement element is rigidly and fixedly attached or coupled. This includes that it may also be integrally formed in one piece with the door former 8. The cone-shaped element 11 is elongate and has a straight longitudinal axis about which it has circular symmetry. It tapers continuously from a first or base end 11a to a second or tip end 11b. Overall the shape of the cone-shaped element 11 is frustoconical. The cone-shaped element 11 is directly attached to the inner flange 8a at its base end 11a, and the attachment is realized in such a manner that the longitudinal axis of the cone-shaped element 11 is extending at a obtuse angle with respect to and away from the inner flange 8a. For the purpose of the attachment and for reliably coupling the cone-shaped element 11 to the door former 8, a suitable inclined support portion 8d is provided as an integral part of the door former 8 at the end portion 9 thereof.

Near the tip end 11b the cone-shaped element 11 comprises a circumferentially extending groove 11c, the purpose of which will be explained further below.

To the terminal end of the end portion 10 of each of the fuselage formers 6 a housing element 12 forming a second engagement element is rigidly and fixedly attached or coupled. This includes that it may also be integrally formed in one piece with the fuselage former 6. The housing element 12 defines a cavity 12a of frustoconical shape matching the shape of a longitudinal portion of the cone-shaped element 11. Thus, the cavity 12a is elongate and extends along a straight longitudinal axis. The cavity is open at both a first or base end 12b and a second or tip end 12c of the housing element 12. The housing element 12 is attached or coupled to the terminal end of the end portion 10 of the respective fuselage former 6 over the entire cross-section thereof, i.e. to the inner flange 6a, the web 6c and the outer flange 6b.

The longitudinal axis of the cavity 12a is oriented at an angle with respect to the flanges 6a, 6b such that upon moving the door 3 from the open position illustrated in Figure 2 to the closed position illustrated in Figure 3, each cone-shaped element 11 enters the cavity 12a of the corresponding housing element 12 through the open base end 12 thereof and is eventually entirely disposed inside the cavity 12a with the exception of a projecting tip portion 11d of the cone-shaped element 11. In the closed position of Figure 3, the base end 12b of the housing element 12 abuts the support portion 8d and the first flange 8a of the corresponding door former 8, and the groove 11c is located just outside the cavity 12a at the tip portion 12c of the housing element 12. Further, the cone-shaped element 11 is in form-closed engagement with the housing 12, i.e. the interior walls defining the cavity 12a are in contact with the cone-shaped element 11 over their entire surface. Thus, the cone-shaped elements 11 and housing elements 12 constitute first and second engagement elements.

This arrangement ensures that even in case of load-induced deformations of the fuselage structure, the cone-shaped elements 11 and housing elements 12 can be reliably and easily engaged with each other by simple moving the door 3 to the closed position the cone-shaped elements 11 and housing elements 12 - and, thus, also the door formers 8 and fuselage formers 6 - have defined relative positions.

In order to lock the cone-shaped elements 11 and housing elements 12 in the position shown in Figure 3 and to prevent inadvertent opening of the door 3, a separate gripper 13 comprising two gripping jaws 13a, 13b is attached to each of the door formers 8 at the terminal end of the inner flange 8b thereof. The gripping jaws 13a, 13b can be moved by a gripper movement mechanism 14 between an open position of the gripper 13 shown in Figure 2 and a closed position of the gripper 13 shown in Figure 3. The gripper movement mechanism 14 comprises a latching means for selectively locking the grippers 13 in the closed position.

The gripping jaws 13a, 13b are shaped and configured such that when the cone-shaped elements 11 are completely seated in the cavities 12a of the housing elements 12 (i.e. in the position of Figure 3) and the gripping jaws 13a, 13b are moved into the closed position of the gripper 13, the gripping jaws 13a, 13b engage the grooves 11c of the cone-shaped elements 11 such that each cone-shaped element 11 is securely clamped between the gripping jaws 13a, 13b of the corresponding gripper 13 and a relative movement between the cone-shaped element 11 and the housing element 12 is prevented. In particular, the cone-shaped elements 11 cannot be withdrawn from their form-closed engagement with the housing elements 12. In this regard, it is preferred for the grippers 13 to abut the tip ends 12 of the corresponding housing elements 12.

The grippers 13 are fixedly connected to the inner flanges 8b. Therefore, any circumferential forces and bending forces transmitted via the inner flanges 6b of the fuselage formers 6 are transmitted via the housing elements 12, the cone-shaped elements 11 (due to the form-closed engagement with the housing elements 12) and the grippers 13 to the inner flanges 8b of the door formers 8. Further, any circumferential forces and bending forces transmitted via the outer flanges 6a of the fuselage formers 6 are transmitted via the housing elements 12 and the cone-shaped elements 11 (due to the form-closed engagement with the housing elements 12) to the outer flanges 8a of the door formers 8. Consequently, the door formers 6 and fuselage formers 8 are in effect integrally coupled to each other, thereby effectively integrating the closed door 3 into the fuselage structure.

## Claims

1. A cargo door arrangement (1) for an aircraft comprising
- a fuselage portion (2) of an aircraft, the fuselage portion (2) comprising a skin portion (5) and at least one fuselage former (6) having a first flange (6a) connected to the skin portion (5), a second flange (6b) and a web (6c) connecting the first and second flanges (6a, 6b), wherein an opening (4) is provided in the fuselage portion (2) and interrupts the at least one fuselage former (6), such that it has two sections extending from opposite edges of the opening (4),
- a cargo door (3) comprising at least one door former (8) having a first flange (8a) connected to a door panel (7), a second flange (8b) and a web (8c) connecting the first and second flanges (8a, 8b), wherein the cargo door (3) is coupled to the fuselage portion (2) such that it is selectively movable between a closed position, in which it closes the opening (4), and an open position, in which it allows access through the opening (4), and
- a locking mechanism for selectively locking the cargo door (3) in the closed position,
**characterized in that** in the closed position each of the door formers (8) extends between the two sections of a corresponding one of the fuselage formers (6), and **in that** the locking mechanism comprises for at least one of the door formers (8)
- a first engagement element (11) having opposite first and second ends (11a, 11b) and a tapered portion tapering in the direction from the first end (11a) to the second end (11b), wherein the first engagement element (11) is rigidly connected at the first end (11a) to the first flange (8a) of the corresponding door former (8) at an end portion (9) thereof,
- a second engagement element (12) comprising a tapered cavity (12a) open at a first end (12b) and tapering from the first end (12b) to a second end (12c) of the cavity (12a), wherein the cavity (12a) has a shape matching the shape of the tapered portion, and wherein the second engagement element (12) is rigidly connected to an end portion (10) of the respective fuselage former (6) at least at the first and second flanges (6a, 6b) thereof and in such a manner that
- from the first end (12b) to the second end (12c) the cavity (12a) extends in a direction between the first and second flanges (6a, 6b) of the respective fuselage former (6) and
- upon moving the cargo door (3) into the closed position the tapered portion is engageable with the cavity (12a) such that in the closed position there is a form-closed engagement between the tapered portion and the second engagement element (12) in a first and a second engagement region, wherein the first engagement region is arranged proximate to the first end (12b) of the cavity (12a) and the second engagement region is arranged proximate to the second end (12c) of the cavity (12a), and
- a connecting means (13) adapted to rigidly connect in the closed position of the cargo door (3) the second flange (8b) of the respective door former (8) to the first or second engagement element (11, 12) at a position closer to the second end (12c) of the cavity (12a) than to the open first end (12b) of the cavity (12a).

2. The cargo door arrangement (1) according to claim 1, further comprising for each pair of the first and second engagement elements (11, 12) a latching means (13) adapted to be movable between a release position, in which the first and second engagement elements (11, 12) can be disengaged from each other, and a latching position, in which disengagement of the first and second engagement elements (11, 12) is prevented.

3. The cargo door arrangement (1) according to claim 2, wherein the connecting means (13) is constituted by the latching means (13) and wherein the latching means (13) is connected to the second flange (8b) of the respective door former (8) and in the latching position engages the first or second engagement element (11, 12) at a position closer to the second end (12c) of the cavity (12a) than to the open first end (12b) of the cavity (12a).

4. The cargo door arrangement (1) according to claim 3, wherein the latching means (13) comprises a gripping means (13) adapted to grip in the latching position the first or second engagement element (11, 12) at a position closer to the second end (12c) of the cavity (12a) than to the open first end (12b) of the cavity (12a).

5. The cargo door arrangement (1) according to claim 4, wherein the cavity (12a) is also open at the second end (12c) and wherein in the closed position of the cargo door (3) the first engagement element (11) extends through the second end (12c) of the cavity (12a) and projects with a portion (11d) from the second engagement element (12), wherein the projecting portion (11d) comprises an engagement means (11c) adapted to be engaged by the gripping means (13).

6. The cargo door arrangement (1) according to claim 5, wherein the engagement means (11c) is a groove (11c).

7. The cargo door arrangement (1) of any of claims 4 to 6, wherein the gripping means (13) comprises two gripping jaws (13a, 13b) which are hinged to the respective door former (8).

8. The cargo door arrangement (1) according to claim 1 or claim 2, wherein the connecting means is fixedly connected to the second flange (8b) of the respective door former (8) and to the first engagement element (11) at a position closer to the second end (12c) of the cavity (12a) than to the open first end (12b) of the cavity (12a) when the cargo door (3) is in the closed position.

9. The cargo door arrangement (1) according to any of the preceding claims, wherein upon moving the cargo door (3) into the closed position the first engagement element (11) enters the cavity (12a) through the open first end (12b) thereof.

10. The cargo door arrangement (11) according to any of the preceding claims, wherein the tapered portion extends from the first end (11a) of the first engagement element (11) and/or up to the second end (11b) of the first engagement element (11).

11. The cargo door arrangement (1) according to any of the preceding claims, wherein the second engagement element (12) is rigidly connected to the end portion (10) of the fuselage former (6) over the entire cross section thereof.

12. The cargo door arrangement (1) according to any of the preceding claims, wherein over the entire length from the first end (12b) to the second end (12c) the cross-sectional shape of the cavity (12a) exhibits circular symmetry.

13. The cargo door arrangement (1) according to any of the preceding claims, wherein the tapered portion is cone-shaped or pyramidal shaped.

14. The cargo door arrangement (1) according to any of the preceding claims, wherein the first engagement element (11) is directly attached to the first flange (8a) of the respective door former (8) and/or the connecting means (13) is directly attached or adapted to be directly attached to the second flange (8b) of the respective door former (8).

15. An aircraft comprising a cargo door arrangement (1) according to any of the preceding claims.
